# EUROPEAN PATENT SPECIFICATION

(11) **EP 3 998 868 B1**
(45) Date of publication and mention of the grant of the patent: **10.01.2024**
(21) Application number: 20760568.4
(22) Date of filing: 17.07.2020
(51) Int. Cl.: A23G 9/04, A23G 9/30, A23L 2/38, A23L 2/50, A23L 3/28

(54) **APPARATUS AND METHOD FOR PREPARING AND DISPENSING REFRIGERATED PRODUCTS**
VORRICHTUNG ZUR HERSTELLUNG UND AUSGABE VON GEKÜHLTEN LEBENSMITTELPRODUKTEN
APPAREIL DE PRÉPARATION ET DE DISTRIBUTION DE PRODUITS RÉFRIGÉRÉS

(30) Priority: 18.07.2019 IT 201900012321; 08.05.2020 IT 202000010438
(43) Date of publication of application: 25.05.2022
(73) Proprietor: S.P.M. DRINK SYSTEMS S.p.A., 41057 Spilamberto (MO) (IT)
(72) Inventor: GRAMPASSI, Enrico, 41057 Spilamberto (MO) (IT)
(74) Representative: Manzella & Associati
(86) International application number: PCT/IT2020/050179
(87) International publication number: WO 2021/009788

(56) References cited:
- EP-A1- 2 590 515
- IT-A1- BO20 120 482
- US-A- 4 867 052
- US-A1- 2016 058 020
- US-A1- 2017 100 496
- WON WAN-SIK ET AL: "UV-LEDs for the Disinfection and Bio-Sensing Applications", INTERNATIONAL JOURNAL OF PRECISION ENGINEERING AND MANUFACTURING, KOREAN SOCIETY FOR PRECISION ENGINEERING, SPRINGER, vol. 19, no. 12, 26 November 2018 (2018-11-26), pages 1901-1915, XP036645420, ISSN: 2234-7593, DOI: 10.1007/S12541-018-0218-5 [retrieved on 2018-11-26]
- SONG KAI ET AL: "Application of ultraviolet light-emitting diodes (UV-LEDs) for water disinfection: A review", WATER RESEARCH, ELSEVIER, AMSTERDAM, NL, vol. 94, 2 March 2016 (2016-03-02), pages 341-349, XP029488852, ISSN: 0043-1354, DOI: 10.1016/J.WATRES.2016.03.003
- M. MACLEAN ET AL: "Inactivation of Bacterial Pathogens following Exposure to Light from a 405-Nanometer Light-Emitting Diode Array", APPLIED AND ENVIRONMENTAL MICROBIOLOGY, vol. 75, no. 7, 6 February 2009 (2009-02-06), pages 1932-1937, XP055307098, US ISSN: 0099-2240, DOI: 10.1128/AEM.01892-08

## Description

### Technical field

The present invention relates to an apparatus for preparing and dispensing refrigerated products, such as, for example, slushes, creamy ice creams, sorbets, cold drinks and the like.

### Background of the invention

Counter-top apparatuses are currently known which allow the user to instantly prepare and dispense refrigerated products of the type of traditional water-based slushes or alternatively creamy products such as ice creams, sorbets, coffee creams and the like.

Such known apparatuses generally consist of a tank suitable for containing the product to be prepared and dispensed, in which a cooling device for cooling the product to the appropriate temperature and a mixing device, which determines the continuous circulation of the product inside the tank, are arranged. The circulation device is made up, for example, of a screw member rotated along an axis longitudinal to the tank. The circulation device is capable of conveying the cooled product towards a front area, where a product dispensing device is located. The dispensing device is equipped with a shutter element which may be operated by means of an external lever member.

The cooling device is often made up of a coil evaporator arranged inside a substantially cylindrical tubular body, arranged along the horizontal axis of the tank. The evaporator is connected to a refrigeration system housed inside a base body on which the tank containing the product is mounted. The screw member of the mixing device winds around the tubular body of the evaporator.

In practice, the rotation of the screw member of the mixing device continuously pushes the product from the rear part of the tank towards the front, where the dispensing device is located. In consequence, a continuous recirculation of the product is created inside the tank which ensures the desired fluidity.

An apparatus for dispensing refrigerated products of this type is shown for example in US patent application 2008/0202130.

Italian patent application BO20 120 482 A1 shows an apparatus for dispensing refrigerated products comprising a containment tank, a mix device arranged inside said tank to determine the continuous circulation of the product and to convey the product towards a dispense zone equipped with a dispenser device, a cooling device arranged inside the tank to cool the product, actuated by a refrigeration apparatus placed in a remote position.

A problem that arises during the use of the apparatuses in question is given by the need to keep the characteristics of the dispensed product constant, in particular avoiding a deterioration of its hygienic conditions.

The product contained inside the tank is in fact comes into contact with the ambient air, at least for its surface layer, and therefore subject to the action of bacteria and the like with consequent alteration of taste and also health risks.

US 8,365,547 shows a machine for preparing and distributing refrigerated products, in particular soft ice cream, comprising an ultraviolet ray lamp arranged at the product dispensing nozzle. The ultraviolet lamp performs the function of sterilizing the dispensing nozzle.

US 4,867,052 shows a machine for making ice cream comprising a chamber closed by a door, in which the containers containing the product to be cooled in the liquid state are present. From this chamber the product is conveyed by means of a pump to a cooling cylinder arranged in an upper area of the machine. The chamber is equipped with an ultraviolet ray lamp for sterilizing the air introduced into it when the door is opened and the product contained in the containers.

However, known solutions do not satisfactorily solve the need to guarantee the hygienic characteristics of the dispensed product.

A specific problem complained about in this regard is the fact that during use, as the product contained in the tank is consumed, its level inside the tank is lowered, leaving the surface of the walls wet by the product, i.e. covered at least in part by a residual film of product. Since the walls of the tank are in contact with the external environment, in the part no longer in contact with the refrigerated product these wet walls may quickly heat up with a strong risk of becoming infected. In this way, the product subsequently introduced into the tank would also be contaminated, unless the tank was previously sanitized.

### Disclosure

The present invention aims at solving the aforementioned problems, devising an apparatus for preparing and dispensing refrigerated products which maintains constant the characteristics of the dispensed product, in particular avoiding a degradation of the hygienic conditions of the product itself.

Within this aim, a further object of the present invention is to provide an apparatus for preparing and dispensing refrigerated products which ensures the correct hygienic conditions of the tank containing the product being prepared.

Another object of the invention is to provide an apparatus for preparing and dispensing refrigerated products of a simple constructional and functional conception, with reliable operation, versatile in use, and having relatively economical cost.

The aforementioned aims are achieved, according to the present invention, by the apparatus for preparing and dispensing refrigerated products according to claim 1.

The apparatus for preparing and dispensing refrigerated products includes at least one containment tank able to contain the product to be prepared; a cooling device arranged inside said containment tank to cool said product; a mixing device arranged inside said containment tank and capable of determining the continuous circulation of the product inside the tank itself, so as to convey the product towards a frontal area of said tank; a device for dispensing the product, positioned in said frontal area of the containment tank.

According to the present invention, the apparatus for preparing and dispensing refrigerated products comprises a LED lighting device facing an upper area of said containment tank, so as to irradiate at least the upper layer of said product to be prepared.

According to the invention, said LED lighting device faces towards the walls of said containment tank, so as to direct the radiation towards said walls.

According to the invention, said LED lighting device comprises a plurality of light-emitting diodes suitable for emitting UV-A and/or UV-C and/or Near UV-A radiation as defined in present claim 1.

According to the invention, when said light-emitting diodes emit a Near UV-A radiation, this has a wavelength in the range from 400 to 410 nm +/- 3 nm.

Preferably said wavelength is equal to 405 nm.

Preferably, said light-emitting diodes are distributed in a regular manner on at least one pair of boards connected to control means of said lighting device.

Preferably, said boards carrying said light-emitting diodes are arranged inclined downwards, so as to direct the radiation onto the surface of the upper layer of the product contained in said containment tank.

Preferably, each of said boards, bearing said light-emitting diodes, faces towards at least one side wall of the containment tank, so as to direct the emitted radiation onto the side walls.

Preferably, said boards bearing said light-emitting diodes are arranged diverging from each other in such a way that the radiations emitted by the same light-emitting diodes hit the entire surface of the walls of the containment tank.

According to the invention, said LED lighting device is arranged in a rear region of said containment tank.

According to the invention, said LED lighting device is arranged in a housing made at the top of a rear shoulder of a support frame of said containment tank.

Preferably said cooling device comprises a coil evaporator arranged inside a substantially cylindrical tubular body, carried cantilevered, with a horizontal axis, from said rear shoulder of the support frame.

According to the invention, said mixing device comprises a screw member rotated along a longitudinal axis to said containment tank so as to cause the continuous circulation of the product inside the tank itself.

According to an aspect of the invention, said containment tank forms at the front a front wall which, in the upper portion, is inclined towards the inside of said tank, to facilitate the continuous circulation of the product inside the tank itself.

Preferably, said inclined portion of the front wall of the tank has a curvature having the concavity facing towards the inside of the tank itself.

The invention also concerns a method for preparing and dispensing using an apparatus according to at least claim 1.

According to an aspect of the invention, the method for preparing and dispensing refrigerated products provides for directly irradiating said walls of the containment tank by means of said LED lighting device, during the progressive emptying of the same containment tank, in use.

This allows the user to maintain constant the correct hygienic conditions of the containment tank of the product being prepared, during use.

### Description of drawings

The details of the invention will become more evident from the detailed description of a preferred embodiment of the apparatus for preparing and dispensing refrigerated products, illustrated by way of example in the accompanying drawings, where:

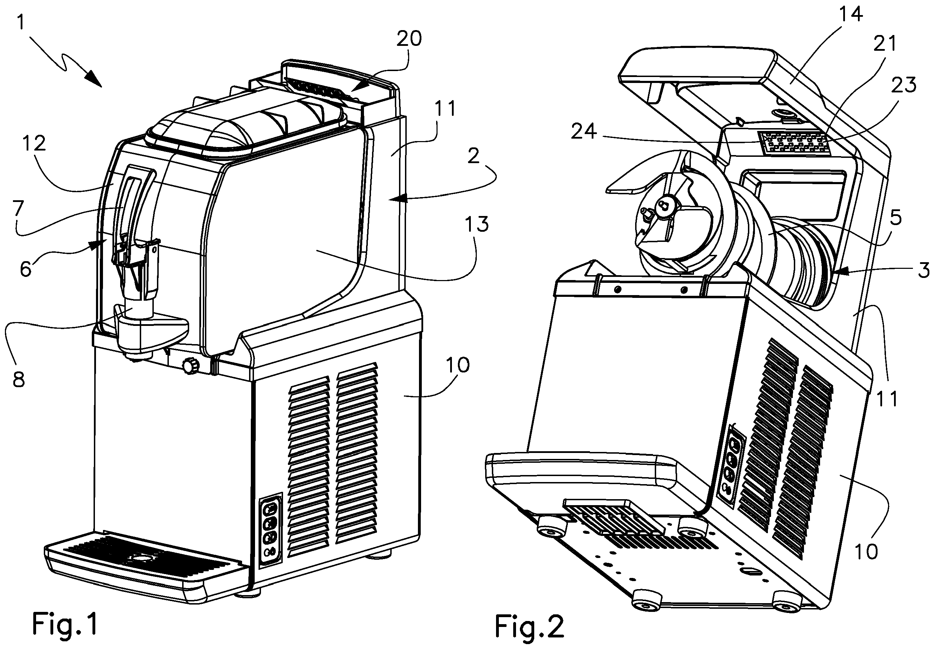

Figure 1 shows a perspective view of the apparatus according to the invention;
Figure 2 shows a perspective view thereof from a different angle, with removed parts to show internal members;

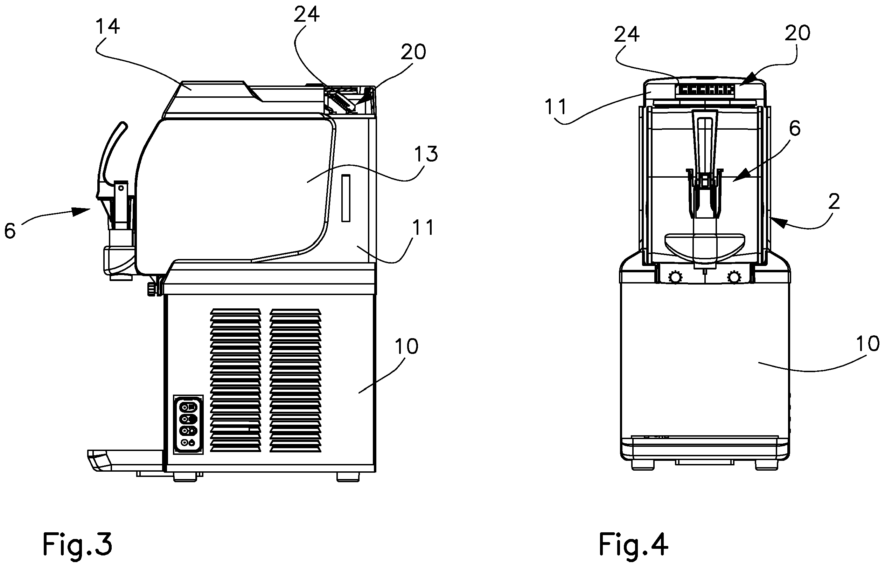

Figure 3 shows a side view of the apparatus with a sectioned detail;
Figure 4 shows a corresponding front view thereof;
Figure 5 shows a perspective view of a different embodiment of the apparatus in question,
with parts removed to show internal members;
Figure 6 shows a detail view of the apparatus of Figure 5;
Figure 7 shows a perspective view from the rear side of this different embodiment of the apparatus;
Figure 8 shows a detail view of the apparatus of Figure 7.

### Best mode

With particular reference to these figures, the reference number 1 indicates as a whole the apparatus for preparing and dispensing refrigerated products, such as for example water-ice, creamy ice creams, sorbets and the like.

The apparatus 1 provides for at least one tank 2 for containing the product to be dispensed, preferably made of transparent plastic material. In the illustrated case, the apparatus provides for a single tank 2 for containing the product, but it is possible to provide for the presence of a different number of such tanks 2 arranged side by side to prepare and dispense different products, for example two or more tanks.

The tank 2 is mounted on a base body 10. The base body 10 has a substantially prismatic shape and is able to contain inside itself the operating members of the apparatus, known per se. In particular, a refrigeration system is housed inside the base body 10 which provides, in a substantially known manner, a compressor and a condenser.

The tank 2 is releasably connected to a support frame forming a shoulder 11 which rises from the rear part of the base body 10.

The containment tank 2 forms at the front a front wall 12 interposed between a pair of side walls 13, substantially vertical.

The tank 2 is open at the top and equipped with a suitable cover 14, which substantially extends the walls of the tank 2.

At the upper portion, the front wall 12 of the containment tank 2 is inclined towards the inside of the tank 2. In particular, this inclined portion of the front wall 12 has a suitable curvature, having the concavity facing towards the inside of the tank 2.

A cooling device 3 is arranged inside the tank 2 to cool the product to a suitable temperature. The cooling device 3 preferably consists of a coil evaporator arranged inside a tubular body 4, substantially cylindrical; the coil evaporator is part of the aforementioned refrigeration system of the apparatus. The cylindrical body 4 is carried in cantilever way, with a horizontal axis, by the shoulder 11 of the support frame.

Inside the containment tank 2 there is also a mixing device 5 consisting of a screw member rotated along an axis longitudinal to the tank 2 to cause the continuous circulation of the product inside the tank 2.

The blades of the screw member are capable of keeping the product mixed and pushing it towards the front area of the tank 2, where the dispensing area is located.

It should be noted that the curvature of the front wall 12 of the tank 2 has the function of facilitating the continuous circulation of the product inside the tank 2 itself, directing the product that has interacted with the mixing device 5 from the front area to the rear area of the tank 2. In this way, in particular, the stagnation of the product in the corner areas of the tank 2 is avoided.

The containment tank 2 has a front delivery device 6 in communication with the lower portion of the same tank 2. The dispensing device 6 is equipped with a shutter member which may be operated by means of an external lever member 7. The shutter member slides inside a cylindrical seat made, with a substantially vertical axis, by a sleeve 8 shaped by the tank 2. More precisely, the shutter is movable, in a known way, in contrast to elastic means, between a closed position and an open position of the clearance of the sleeve 8.

A temperature sensor is also arranged inside the containment tank 2, which is capable of controlling the temperature of the product at the dispensing area. The temperature sensor preferably protrudes frontally from the cylindrical body 4 of the cooling device 3, near the front wall 12 of the tank 2.

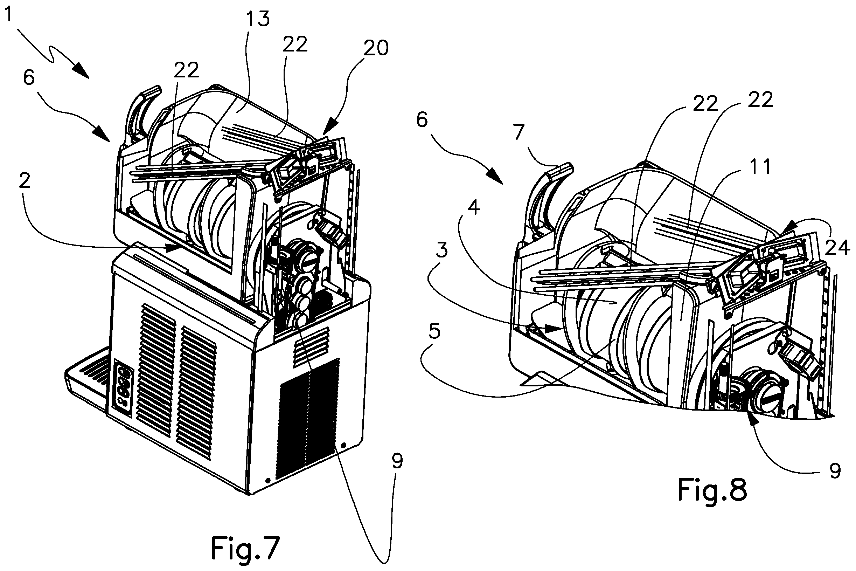

The screw member of the mixing device 5 develops on the external surface of the cylindrical body 4 of the cooling device 3 and is rotated by a shaft which axially crosses the same cylindrical body 4, not visible in the drawings. The shaft protrudes for a portion of it from the front wall of the cylindrical body and is integral with the screw member. The shaft of the screw member is adapted to be driven by a motor member, preferably an electric motor, through a suitable reduction member. In practice, this motor member is made of a gearmotor 9. The gearmotor 9 is housed inside the shoulder 11 which rises from the rear part of the base body 10 and overhangs the cylindrical body 4 of the cooling device 3 (see Figures 7 and 8).

According to the present invention, the apparatus comprises an LED lighting device 20 associated with the support frame of the tank 2. The lighting device 20 faces an upper area of the containment tank 2, so as to irradiate at least the upper layer of the product to be prepared.

According to the invention, the lighting device 20 faces the walls 12, 13 of the containment tank 2, so as to direct the radiation towards the walls 12, 13.

According to the invention, the lighting device 20 comprises a plurality of light-emitting diodes 21, of the type known usually with the abbreviation LED, which are preferably distributed in a regular manner on at least one board 23 connected to the control means of the device. The LEDs are connected in parallel on the board 23.

The LEDs used are of the type known as UV-A and/or UV-C, capable of emitting radiation respectively in the ultraviolet range with a wavelength of 400-315 nm and 280-100 nm, and/or UV-A ultraviolet radiation, as defined in claim 1. These radiations have suitable germicidal characteristics, so as to ensure the sterilization of the product contained in the tank in contact with the air.

According to of the invention, the LEDs used of the type known as Near UV-A are capable of producing radiation close to the upper limit of ultraviolet radiation UV-A in the range of 400-410 ∓3 nm.

In particular, the Near UV-A LEDs used are capable of emitting radiation with a wavelength of 405 nm.

As an example, the Near UV-A LEDs used are of the type of those belonging to the C03 UV series produced by the LiteON^{®} company, more specifically the model called LTPL-C034UVG405-PA.

The radiations known as Near UV-A are located in an interval close to the shortest wavelength that the human eye can perceive, conventionally assumed to be 400 nm.

According to the invention, this interval has a wavelength equal to 400-410 ∓ 3 nm. Near UV-A radiation with a wavelength of 405 nm has been shown to have excellent germicidal characteristics.

The lighting device 20 is arranged in a housing 24 made at the top of the rear shoulder 11 of the supporting frame of the containment tank 2.

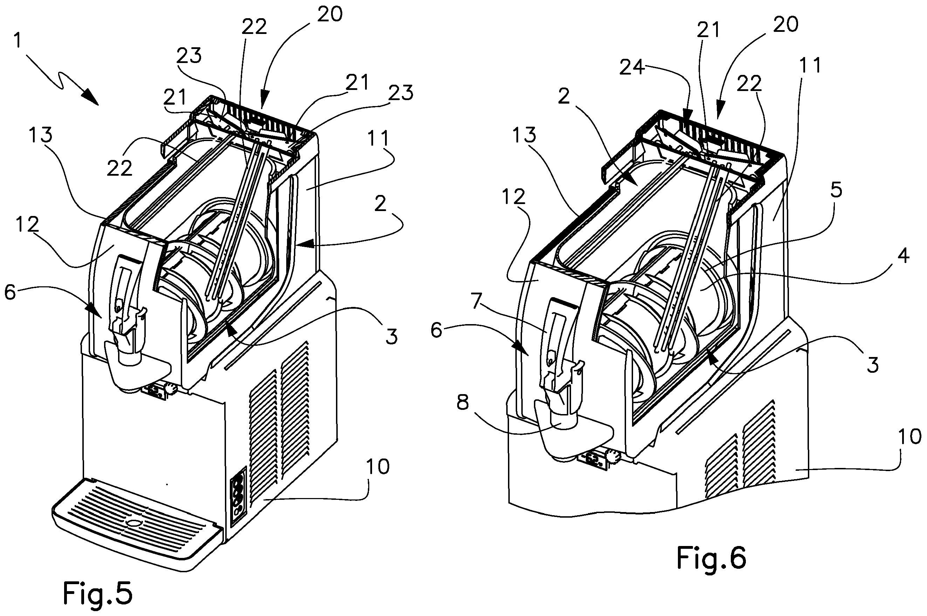

Advantageously, according to the embodiment illustrated in Figures 5-8, the lighting device 20 comprises a pair of boards 23 arranged at an angle to each other inside the housing 24.

More precisely, the boards 23 of the lighting device 20 carrying the LEDs are arranged slightly inclined downwards and each facing a lateral wall 13 of the containment tank 2, so as to direct the radiation emitted over the entire surface of the upper layer of the product contained in the same tank 2.

For visual immediacy, the radiations emitted by the LEDs distributed on the boards 23 of the lighting device 20 were represented with the tracer beams 22.

It should be noted that the boards 23 of the lighting device 20 are arranged diverging from each other in such a way that the radiations emitted by the LEDs invest the entire surface of the walls 12, 13 of the tank 2.

The operation of the apparatus for preparing and dispensing refrigerated products, such as water-ice, creamy ice creams, sorbets and the like, is easily understood from the previous description.

After having introduced the product into the tank 2, through the upper opening, the preparation cycle is activated, that is, in which the product is progressively frozen, passing from the liquid phase to the icy one, typical of water-ice, for example. In particular, the cooling device 3 is activated and the screw member of the mixing device 5 is rotated at a predetermined speed.

At the same time, the UV-A and/or UV-C and/or Near UV-A LED lighting device 20 is switched on, preferably automatically, which directs the radiation onto the upper layer of the product contained in the tank 2.

This UV or Near UV radiation has germicidal characteristics, so as to ensure the sterilization of the product in contact with the air contained in the tank 2.

It should be noted that, during the operation of the apparatus, the product contained in the tank 2 is continuously stirred by the action of the screw member of the mixing device 5, in particular favored by the shape of the front wall 12 which, at the upper portion, is suitably inclined towards the inside of the tank 2. This mixing causes all the product contained in the tank 2 to be progressively subjected to UV or Near UV radiation and then sterilized.

It has been verified that, with the usual dimensions of the tanks currently used in apparatuses of this type, the product contained in the tank is completely sterilized in a time not exceeding four hours.

When required, the product is dispensed naturally by opening the dispensing device 6 by means of the lever member 7.

The dispensing of the product causes a progressive decrease in the level of the product inside the containment tank 2, leaving the internal surface of the walls 12, 13 of the tank 2 itself exposed.

In this condition, the internal surface of the walls is hit by the radiation emitted by the UV or Near UV LED lighting device 20.

Advantageously, the radiation emitted by the LED lighting device 20 has a wavelength equal to 405 nm, falling within the range of Near UV-A radiation.

It has been verified that at this wavelength, the radiation shows high germicidal disinfection characteristics, falling within the visible light field close to the upper limit of the wavelength of UV-A ultraviolet radiation.

This radiation also combines the reliability of LED lights with the brightness of conventional light sources.

This radiation therefore carries out its own germicidal action also on the internal surface of the tank walls, ensuring that the hygienic conditions of the tank are preserved in use.

The apparatus in question therefore achieves the purpose of operating in an optimal manner the preparation and dispensing of refrigerated products, such as water-ice, creamy ice creams, sorbets and the like, ensuring that the product maintains constant characteristics, and in particular the necessary hygienic conditions.

This result is achieved thanks to the inventive idea of combining the sterilization action of the surface layer of the product contained in the tank operated by the UV-A and/or UV-C and/or Near UV-A LED lighting device with the mixing action of this product operated by the screw member of the mixing device.

It has been verified that this sterilization action is particularly effective with the use of a LED lighting device capable of emitting a radiation with a wavelength equal to 405 nm.

A prerogative of the invention is the fact that the sterilization action carried out by the LED lighting device is also applied to the internal surface of the walls of the containment tank, when, following the dispensing of the prepared product, the level of the product inside the tank decreases progressively.

In this way the product containment tank is kept in the prescribed hygienic conditions, so that it is possible to introduce new product to be prepared inside the tank without it being contaminated and therefore without the need for a preventive sanitization of the tank.

Another prerogative of the invention is the fact that the aforementioned result is obtained thanks to a very simple structure, which does not change the overall dimensions of the apparatuses currently in use.

The apparatus of the invention, defined in claim 1, is for preparing and dispensing cold drinks such as juices, squashes, teas and the like. Such apparatuses for the preparation and dispensing of cold beverages, for example, in a known way, provide a substantially vertical tank equipped with a suitable dispensing device at the front, near the base. A beverage cooling device is connected to the tank at the base. Inside the tank there is a device for mixing the drink, comprising a stirring member. According to the invention, this stirring member is constituted by a screw member suitably driven in rotation. In other embodiments that are not part of the invention, the stirring member is constituted by a tubular element suitable for producing a fountain effect.

In the practical implementation of the invention, the materials used, as well as the shape and dimensions, may change according to the requirements as covered in the scope of the appended claims.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. An apparatus for preparing and dispensing refrigerated products, including at least one containment tank (2) suitable for containing the product to be prepared; a cooling device (3) arranged inside said containment tank (2) to cool said product; a mixing device (5) arranged inside said containment tank (2), comprising a screw member rotatable with respect to a longitudinal axis of said tank (2) to cause the continuous circulation of the product inside the tank (2), so as to convey the product towards a front area of said tank (2); a product dispensing device (6), placed at said front area of the containment tank (2), **characterized in that** said apparatus comprises a LED lighting device (20), said LED lighting device (20) comprising a plurality of light emitting diodes (21) suitable for emitting UV-A radiation and/or UV-C radiation and/or Near UV-A radiation, facing at an upper area of said containment tank (2), so as to irradiate at least the upper layer of said product to be prepared; said UV-A radiation having a wavelength in the range of 400-315 nm, said UV-C radiation having a wavelength in the range of 280-100 nm, and said Near UV-A radiation having a wavelength in the range of 410-400 nm +/- 3 nm; said LED lighting device (20) being arranged at a rear region of said containment tank (2), in a housing (23) made at the top of a rear shoulder (11) of a supporting frame of said containment tank (2), wherein that said LED lighting device (20) faces the walls (12, 13) of said containment tank (2), so as to direct the radiation towards said walls (12, 13).

2. An apparatus as in claim 1, **characterized in that** said plurality of light-emitting diodes (21) are capable of emitting a radiation with a wavelength equal to 405 nm.

3. An apparatus as in any one of the preceding claims, **characterized in that** said plurality of light-emitting diodes (21) are distributed in a regular manner on at least one board (23) connected to a control means of said lighting device (20).

4. An apparatus according to claim 3, **characterized in that** said light-emitting diodes (21) are distributed in a regular manner on at least one pair of boards (23) connected to the control means of said lighting device (20).

5. An apparatus as in claim 4, **characterized in that** said boards (23) bearing said light-emitting diodes (21) are arranged inclined downwards so as to direct the radiation onto the surface of the upper layer of the product contained in said containment tank (2).

6. An apparatus according to claim 4 or 5, **characterized in that** said boards (23) bearing said light-emitting diodes (21) each are turned in the direction of at least one side wall (13) of said containment tank (2).

7. A method for preparing and dispensing refrigerated products using an apparatus according to any one of claims 1-6, comprising the steps of
a. feeding the product to be prepared into the containment tank (2);
b. operating the cooling device (4) arranged inside said containment tank (2) to cool said product;
c. at the same time determining the continuous circulation of said product inside said containment tank (2), to convey the product towards a frontal area of the containment tank (2);
d. irradiating said product by means of the LED lighting device (20) which faces an upper area of said containment tank (2) and turned towards the walls (12, 13) of the same containment tank (2), in a way to direct the radiation towards said walls (12, 13).

8. A method as in claim 7, **characterized in that** it provides for directly irradiating said walls (12, 13) of said containment tank (2) by means of said LED lighting device (20), during the progressive emptying, in use, of the same containment tank (2).

## Patentansprüche

1. Gerät zum Zubereiten und Abgeben gekühlter Produkte, die mindestens einen Auffangbehälter (2) beinhaltet, der zum Aufnehmen des zuzubereitenden Produkts geeignet ist; eine Kühlvorrichtung (3), die im Inneren des Auffangbehälters (2) angeordnet ist, um das Produkt zu kühlen; eine Mischvorrichtung (5), die im Inneren des Auffangbehälters (2) angeordnet ist, umfassend ein Schneckenelement umfasst, das in Bezug auf eine Längsachse des Behälters (2) drehbar ist, um die kontinuierliche Zirkulation des Produkts im Inneren des Behälters (2) zu bewirken, um das Produkt zu einem vorderen Bereich des Behälters (2) zu fördern; eine Produktabgabevorrichtung (6), die im vorderen Bereich des Auffangbehälters (2) platziert ist, **dadurch gekennzeichnet, dass** das Gerät eine LED-Beleuchtungsvorrichtung (20) umfasst, die LED-Beleuchtungsvorrichtung (20) umfassend eine Vielzahl von Leuchtdioden (21), die geeignet sind, um UV-A-Strahlung und/oder UV-C-Strahlung und/oder UV-A-nahe Strahlung zu emittieren, und die einem oberen Bereich des Auffangbehälters (2) zugewandt sind, um zumindest die obere Schicht des zuzubereitenden Produkts zu bestrahlen; die UV-A-Strahlung eine Wellenlänge in dem Bereich von 400-315 nm aufweist, die UV-C-Strahlung eine Wellenlänge in dem Bereich von 280-100 nm aufweist, und die Nah-UV-A-Strahlung eine Wellenlänge in dem Bereich von 410-400 nm +/-3 nm aufweist; wobei die LED-Beleuchtungsvorrichtung (20) in einem hinteren Bereich des Auffangbehälters (2) in einem Gehäuse (23) angeordnet ist, das an der Oberseite einer hinteren Schulter (11) eines Tragrahmens des Auffangbehälters (2) gefertigt ist, wobei die LED-Beleuchtungsvorrichtung (20) den Wänden (12, 13) des Auffangbehälters (2) zugewandt ist, um die Strahlung auf die Wände (12, 13) zu richten.

2. Vorrichtung nach Anspruch 1, **dadurch gekennzeichnet, dass** die Vielzahl von Leuchtdioden (21) in der Lage ist, eine Strahlung mit einer Wellenlänge gleich 405 nm zu emittieren.

3. Vorrichtung nach einem der vorherigen Ansprüche, **dadurch gekennzeichnet, dass** die Vielzahl von Leuchtdioden (21) regelmäßig auf mindestens einer Platine (23) verteilt sind, die mit einer Steuereinrichtung der Beleuchtungsvorrichtung (20) verbunden ist.

4. Vorrichtung nach Anspruch 3, **dadurch gekennzeichnet, dass** die Leuchtdioden (21) regelmäßig auf mindestens einem Paar von Platinen (23) verteilt sind, die mit der Steuereinrichtung der Beleuchtungsvorrichtung (20) verbunden sind.

5. Vorrichtung nach Anspruch 4, **dadurch gekennzeichnet, dass** die Platinen (23), die die Leuchtdioden (21) tragen, nach unten geneigt angeordnet sind, um die Strahlung auf die Oberfläche der oberen Schicht des in dem Auffangbehälter (2) enthaltenen Produkts zu richten.

6. Vorrichtung nach Anspruch 4 oder 5, **dadurch gekennzeichnet, dass** die Platinen (23), die die Leuchtdioden (21) tragen, jeweils in Richtung mindestens einer Seitenwand (13) des Auffangbehälters (2) gedreht werden.

7. Verfahren zum Zubereiten und Abgeben von gekühlten Produkten unter Verwendung eines Geräts nach einem der Ansprüche 1 bis 6, umfassend die folgenden Schritte:
a. Einspeisen des aufzubereitenden Produkts in den Auffangbehälter (2);
b. Betreiben einer Kühlvorrichtung (4), die innerhalb des Auffangbehälters (2) angeordnet ist, um das Produkt zu kühlen;
c. gleichzeitig Bestimmen der kontinuierlichen Zirkulation des Produkts innerhalb des Auffangbehälters (2), um das Produkt zu einem vorderen Bereich des Auffangbehälters (2) zu fördern;
d. Bestrahlen des Produkts mittels der LED-Beleuchtungsvorrichtung (20), die einem oberen Bereich des Auffangbehälters (2) zugewandt ist und zu den Wänden (12, 13) des gleichen Auffangbehälters (2) gerichtet ist, um die Strahlung zu den Wänden (12, 13) zu richten.

8. Verfahren nach Anspruch 7, **dadurch gekennzeichnet, dass** es ein direktes Bestrahlen der Wände (12, 13) des Sicherheitsbehälters (2) mittels der LED-Beleuchtungsvorrichtung (20) während des fortschreitenden Entleerens desselben Auffangbehälters (2) im Gebrauch bereitstellt.

## Revendications

1. Appareil pour préparer et distribuer des produits réfrigérés, comprenant au moins un réservoir (2) de confinement adapté pour contenir le produit à préparer ; un dispositif de refroidissement (3) agencé à l'intérieur dudit réservoir (2) de confinement pour refroidir ledit produit ; un dispositif de mélange (5) agencé à l'intérieur dudit réservoir (2) de confinement, comprenant un élément de vis rotatif par rapport à un axe longitudinal dudit réservoir (2) pour provoquer la circulation continue du produit à l'intérieur du réservoir (2), de manière à transporter le produit vers une zone avant dudit réservoir (2) ; un dispositif de distribution de produit (6), placé au niveau de ladite zone avant du réservoir (2) de confinement, **caractérisé en ce que** ledit appareil comprend un dispositif d'éclairage à LED (20), ledit dispositif d'éclairage à LED (20) comprenant une pluralité de diodes électroluminescentes (21) adaptées pour émettre un rayonnement UV-A et/ou un rayonnement UV-C et/ou un rayonnement proche UV-A, faisant face au niveau d'une zone supérieure dudit réservoir (2) de confinement, de manière à irradier au moins la couche supérieure dudit produit à préparer ; ledit rayonnement UV-A ayant une longueur d'onde dans la plage de 400 à 315 nm, ledit rayonnement UV-C ayant une longueur d'onde dans la plage de 280 à 100 nm, et ledit rayonnement proche UV-A ayant une longueur d'onde dans la plage de 410 à 400 nm +/- 3 nm ; ledit dispositif d'éclairage à LED (20) étant agencé au niveau d'une région arrière dudit réservoir (2) de confinement, dans un logement (23) réalisé au sommet d'un épaulement arrière (11) d'un cadre de support dudit réservoir (2) de confinement, dans lequel ledit dispositif d'éclairage à LED (20) fait face aux parois (12, 13) dudit réservoir (2) de confinement, de manière à diriger le rayonnement vers lesdites parois (12, 13).

2. Appareil selon la revendication 1, **caractérisé en ce que** ladite pluralité de diodes électroluminescentes (21) est capable d'émettre un rayonnement avec une longueur d'onde égale à 405 nm.

3. Appareil selon l'une quelconque des revendications précédentes, **caractérisé en ce que** ladite pluralité de diodes électroluminescentes (21) sont réparties de manière régulière sur au moins une carte (23) connectée à un moyen de commande dudit dispositif d'éclairage (20).

4. Appareil selon la revendication 3, **caractérisé en ce que** lesdites diodes électroluminescentes (21) sont réparties de manière régulière sur au moins une paire de cartes (23) connectées aux moyens de commande dudit dispositif d'éclairage (20).

5. Appareil selon la revendication 4, **caractérisé en ce que** lesdites cartes (23) portant lesdites diodes électroluminescentes (21) sont agencées inclinées vers le bas de manière à diriger le rayonnement sur la surface de la couche supérieure du produit contenu dans ledit réservoir (2) de confinement.

6. Appareil selon la revendication 4 ou 5, **caractérisé en ce que** lesdites cartes (23) portant lesdites diodes électroluminescentes (21) sont chacune tournées dans la direction d'au moins une paroi latérale (13) dudit réservoir (2) de confinement.

7. Procédé de préparation et de distribution de produits réfrigérés à l'aide d'un appareil selon l'une quelconque des revendications 1 à 6, comprenant les étapes consistant à
a. introduire le produit à préparer dans le réservoir (2) de confinement ;
b. faire fonctionner un dispositif de refroidissement (4) agencé à l'intérieur dudit réservoir (2) de confinement pour refroidir ledit produit ;
c. déterminer en même temps la circulation continue dudit produit à l'intérieur dudit réservoir (2) de confinement, pour transporter le produit vers une zone frontale du réservoir (2) de confinement ;
d. irradier ledit produit au moyen du dispositif d'éclairage à LED (20) qui fait face à une zone supérieure dudit réservoir (2) de confinement et qui est tourné vers les parois (12, 13) du même réservoir (2) de confinement, de manière à diriger le rayonnement vers lesdites parois (12, 13).

8. Procédé selon la revendication 7, **caractérisé en ce qu'**il prévoit d'irradier directement lesdites parois (12, 13) dudit réservoir (2) de confinement au moyen dudit dispositif d'éclairage à LED (20), pendant la vidange progressive, en cours d'utilisation, du même réservoir (2) de confinement.
